# NEW EUROPEAN PATENT SPECIFICATION

(11) **EP 0 328 496 B2**
(45) Date of publication and mention of the opposition decision: **17.01.1996**
(45) Mention of the grant of the patent: 09.06.1993
(21) Application number: 89850018.6
(22) Date of filing: 23.01.1989
(51) Int. Cl.: F16C 33/58, F16C 33/64

(54) **A method for the manufacture of a double row angular contact ball bearing**
Verfahren zur Herstellung eines doppelreihigen Schrägkugellagers
Procédé de fabrication d'un palier axial-radial à double rangée de billes

(30) Priority: 11.02.1988 SE 8800460
(43) Date of publication of application: 16.08.1989
(73) Proprietor: SKF Nova AB, S-415 50 Göteborg (SE)
(72) Inventor: Andersson, Börje, S-510 40 Sandared (SE)

(56) References cited:
- DE-A- 1 575 374
- DE-A- 2 518 129
- DE-A- 2 636 903
- DE-C- 821 887
- DE-U- 6 930 529
- DE-U- 8 702 275
- FR-A- 387 411
- FR-A- 1 566 650
- FR-A- 1 605 259
- FR-A- 2 069 550
- GB-A- 953 768
- US-A- 3 657 781
- US-A- 3 732 606

## Description

The present invention relates to a method of manufacturing double row, angular contact ball bearings having integral inner and outer race rings and two rows of balls engaging in axially spaced confronting inner and outer raceways of the rings comprising shaping sheet metal tubular work pieces to form at least partially finished inner and outer race rings having at least one partially finished raceway.

Ball bearings having the race rings made of sheet metal are earlier known in a number of designs. They are simple and inexpensive and are used in applications where the demands for carrying capacity and precision are not too high.Such bearings are generally manufactured in that the outer and the inner race rings are pressed separately to their final shape and are assembled in common manner upon insertion of the balls. The bearings may be of different types, such as deep groove ball bearings, angular contact ball bearings and the like. For different reasons, primarily of manufacturing technical art, they are often single row bearings but there also exist double row bearings. DE-A-2636903 discloses a double row bearing and having a split inner ring. The two inner ring members and the outer ring are provided with raceways in form of undercut grooves so as to secure the balls therein by snap action. US-A-3,732,606 discloses a similar bearing having a split outer race ring. DE-C-25 18 129 refers to double row angular contact ball bearings having a certain ability of angular adjustment of the rings relative to each other. This publication also describes a method of manufacturing double row angular contact ball bearings starting from sheet metal or from tubular work pieces, wherein one or both work pieces is/are first shaped to finished or semi-finished inner or outer race rings by rolling, pressing or deep drawing, whereupon the balls are introduced between the race rings, said race rings finally being finish shaped by rolling or pressing.

US-A-3,657,781 discloses the manufacture of a single row deep groove ball bearing. In the case described it is started from two annular work pieces and they are shaped partly against a tool and partly against the balls. The balls are retained in position by means oft he tool during the shaping of the rings. Due to the big demands, which in this case must be put on the tool and its design, the method becomes complicated and expensive. It is only possible to manufacture single row ball bearings in this manner.

DE-A-1,575,374 discloses a double row angular contact bearing in X-arrangement having an outer and an inner race ring, each one being manufactured from sheet metal in one piece, wherein the outer race ring incorporates at least one circumferential impression between the rows of balls and the inner race ring one circumferential radial bulging axially outside each row of balls.

DE-U-6 930 529 refers to a double-row angular contact ball bearing, having an outer race ring with a helically slotted portion between the race tracks, for allowing the outer race ring to be axially compressed for introducing the balls of the second row of balls. Said race ring after introduction of the balls being relieved from the axial compression, whereupon an outer collar of rubber or plastic material may be cast in situ over the race ring, thereby filling the slot to prevent later axial compression, which should cause the balls to fall out of the bearing in the unloaded zone. The provision of the collar means an extra production operation, resulting in a comparatively thick-walled and expensive compound ring, consisting of a metallic, substantially tubular member, bonded to the plastic or rubber collar.

Since long it has been a desire to be able to manufacture double row angular contact ball bearings from sheet metal in an unexpensive and simple manner at the same time as the result shall be products having such a high quality that they would obtain a wide range of use. An important property in bearings of this type is that it is possible to adjust the clearance in the bearing between the balls and the race rings without the necessity of using so called mating, which is an expensive operation.

The invention relates to methods of manufacturing double row angular contact ball bearings as defined in claims 1 to 3.

The invention hereinafter will be further described with reference to the accompanying drawings, wherein:
Fig 1 in section shows a typical bearing manufactured according to the invention
Fig 2 shows a method for manufacturing the bearing of Fig. 1
Fig 3 shows an alternative method of manufacturing the bearing according to Fig. 1
Fig 4 shows a modification of the bearing of Fig. 1
Fig 5 shows a sealed-off embodiment of the bearing of Fig. 1
Fig 6 shows a modification of the bearing of Fig. 1
Fig 7 shows a sealed-offembodimentofthe bearing of Fig. 6, and
Fig. 8 shows a modification of the bearing according to Fig. 1.

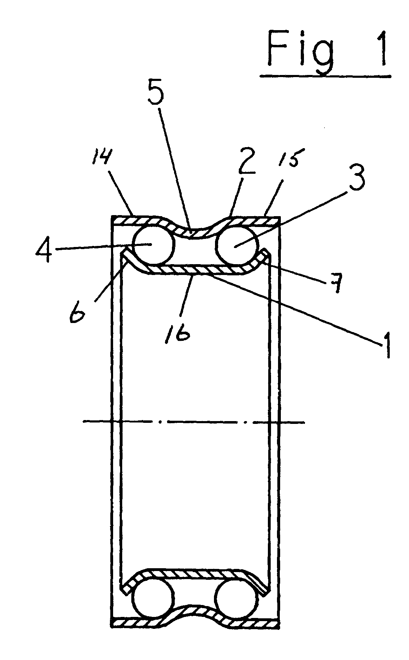

Fig. 1 shows a double row angular contact ball bearing having an inner race ring 1, an outer race ring 2 and two rows of balls 3 and 4 disposed between these race rings. The outer race ring 2 is provided with a depression 5 between the rows of balls, but otherwise it is cylindrical. The inner race ring 1 has cylindrical form, but it is at both axial ends provided with a circumferential radial bulging. Hereby is obtained a two row angular contact ball bearing. The bearing according to Fig. 1 has no retainer for the balls, which means that it incorporates a maximum number of balls. However, the invention is not limited to manufacture of bearings without retainer.

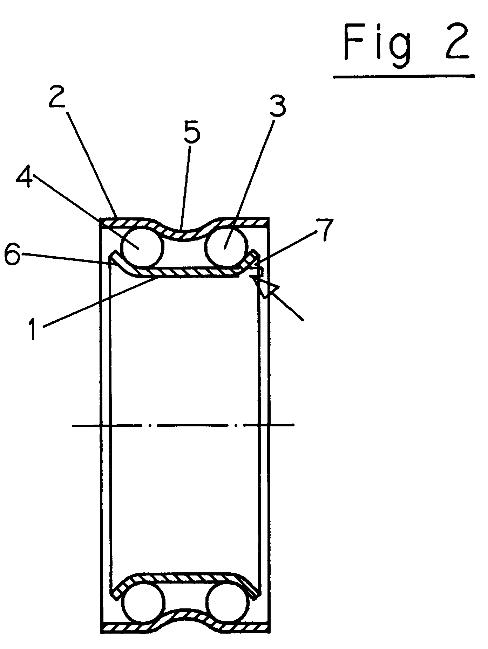

Fig. 2 shows a stage during the manufacture of a bearing according to Fig. 1. The outer race ring 2 in this case has been produced prior to the assembly in that starting from a tube on there has been rolled a circumferential depression 5. The inner race ring 1 also has been partly shaped before the assembly in that a radial bulging 6 has been rolled atone axial end of a piece of tube. The opposite end 7, has been left unshaped until after the balls 3 and 4 have been introduced. By displacing the finished outer race ring 2 axially relative to the semi-finished inner race ring 1 it will be possible to insert the balls. The final stage in the manufacture is clamping the semi-finished bearing in a fixture and rolling in the second axial end 7 of the inner race ring, such as shown by the arrow. For ascertaining that the races in the bearing will become smooth and uniform it is a prerequisite that the balls are kept rotating during the rolling of the end 7. This is obtained in that the inner race ring or the outer race ring is caused to rotate during the rolling operation.

By applying a carefully adapted pressure against the end 7 during the rolling, it is possible to achieve a bearing entirely free from play. This is normally achieved in that the race rings are measured and mated thus that a desired or no tolerance results. By the method according to the invention it has become possible entirely to eliminate this operation, which is of course both expensive and time-wasting.

As the race tracks have been rolled during the time the balls are rotating it has been obtained a surface smoothness in the tracks, which is almost as high as the surface smoothness for ground rings. The frictional resistance is almost as low as at a corresponding bearing having ground rings.

The rolling of the end 7 in the inner race ring is carried through with only the balls 3 as counterhold. It thus is not necessary to use any external counterhold in addition to the balls nor any other device for maintaining the balls in position during the rolling operation. This is of course a considerable improvement as compared to the earlier known methods.

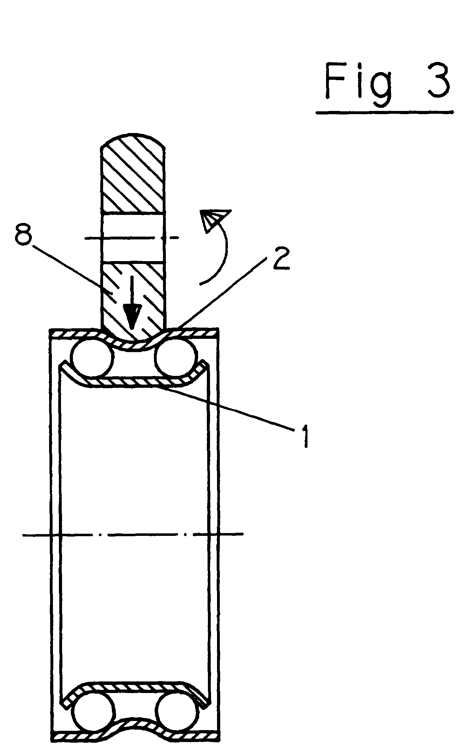

Fig. 3 shows a further method of manufacturing a bearing according to the invention. The inner race ring in t his case is finish shaped prior to the assembly. The outer race ring 2, which initially had the shape of a tube, is given a depression between the rows of balls by means of a press roller 8, at the same time as the outer race ring 2 is kept in rotation. The result will be a bearing having the same properties as that according to Fig. 2.

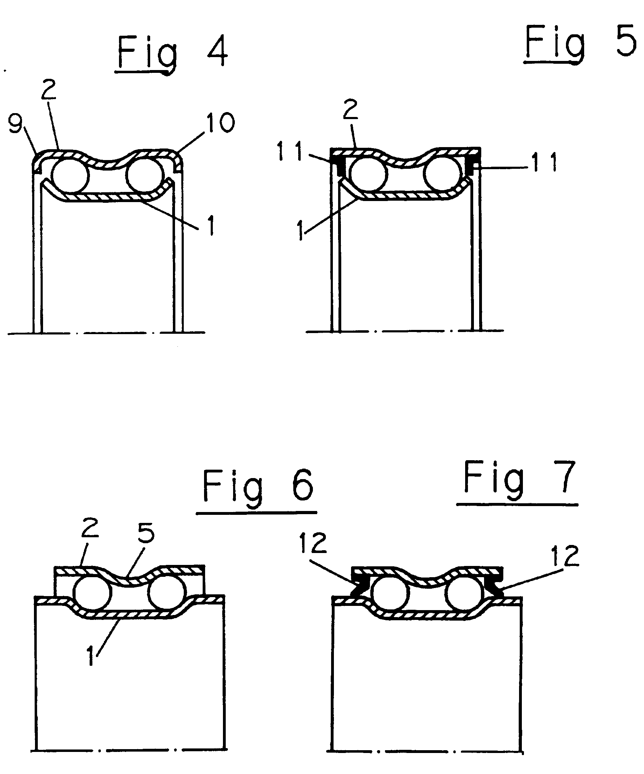

Fig. 4 shows a bearing manufactured according to the invention having the same inner race ring 1 as in the earlier figures, but wherein the two ends 9 and 10 of the outer race ring 1, have been rolled radially inwards. These edges thereby form a protection for the bearing and can almost be compared to a labyrinth seal.

Fig. 5 shows a bearing like that in Fig. 1 wherein it has been chosen to protect the bearing by means of a cover 11. This is possible as the outer race ring 2 has a bigger axial length than the Inner race ring 1.

Fig. 6 shows a modification of the bearing according to Fig. 1. In this case it has been started from a tube for the inner race ring, having bigger axial length than that according to Fig. 1. In this manner has been obtained a bearing having an inner race ring projecting outside the outer race ring 2 and thereby is obtained a bearing, which is less susceptible to external axial forces.

If desired it is possible to fold these edges and insert reinforcing threads in the spaces formed by the folding. The bearing thereby will become more rigid. A reinforcing thread may for the same purpose and at the same time be positioned in the depression 5 in the outer race ring, which will thereby also become more stiff.

Fig. 7 shows the same bearing as in Fig. 6. The only difference is that the spaces axially outside the balls have been used for inserting seals 12.

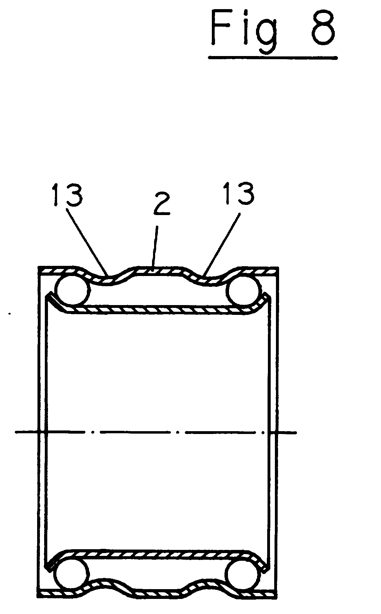

Fig. 8 finally shows a bearing like that in fig. 1, with the difference that it axially is longer than the first one. The outer race ring 2 therefore is equipped with two impressions 13.

The present invention provides a method of manufacturing a bearing, in different variants and in different manners within the scope of the claims. The quality of the bearings is high in spite of the very inexpensive manufacturing method.

## Claims

1. A method of manufacturing a double row angular contact ball bearing having an integral inner ring (1), an integral outer (2) ring and two rows of balls (3, 4) engaging in axially spaced confronting inner and outer raceways of the rings; the inner and outer race rings (1, 2) being made of sheet metal tubular work pieces;
said outer race ring (2) having at least one circumferential depression (5) between the rows of balls (3, 4) and first and second axially extending planar portions (14, 15) extending axially outwardly of respective ones of said rows of balls;
said inner race ring (1) having a circumferential radially outwardly bent portion (6, 7) axially outwardly of each of said rows of balls (3, 4) and a third axially extending planar portion (16) extending between said rows of balls;
and the transition between said first and second planar portions (14, 15) and said depression (5), and between said bent portions (6, 7) and said third planar portion (16), respectively, forming said confronting raceways comprising the steps of:
a) shaping a first sheet metal tubular work piece with a circumferential radially inward depression (5) to form a finished outer ring (2) by rolling, pressing or deep drawing
b) introducing rows of balls (3, 4) between the finished outer ring (2) and a second sheet metal tubularwork piece (1) forming a partially finished inner ring
c) shaping the partially finished inner ring (1) to form a finished inner ring (1) with a circumferential radially outward bent portion (6, 7) at both axial ends by rolling or pressing after insertion of the balls by causing the inner ring (1) to rotate in a tool, which exerts an axial/radial pressure against both ends of the inner ring, whereby the balls (3, 4) serve as counterholds during the rolling or pressing operation, the rings are kept rotating relative to one another to effect rolling the rows of balls (3, 4) constantly about the circumferential periphery of the inner ring and whereby the balls are permanently encapsulated in two rows forming a bearing having a desired tolerance, preferably a bearing free from play.

2. A method of manufacturing a double row angular contact ball bearing having an integral inner ring (1), an integral outer (2) ring and two rows of balls (3, 4) engaging in axially spaced confronting inner and outer raceways of the rings; the inner and outer race rings (1, 2) being made of sheet metal tubular work pieces;
said outer race ring (2) having at least one circumferential depression (5) between the rows of balls (3, 4) and first and second axially extending planar portions (14, 15) extending axially outwardly of respective ones of said rows of balls;
said inner race ring (1) having a circumferential radially outwardly bent portion (6, 7) axially outwardly of each of said rows of balls (3, 4) and a third axially extending planar portion (16) extending between said rows of balls;
and the transition between said first and second planar portions (14, 15) and said depression (5), and between said bent portions (6, 7) and said third planar portion (16), respectively, forming said confronting raceways comprising the steps of:
a) shaping a first sheet metal tubular work piece with a circumferential radially inward depression (5) to form a finished outer ring (2) by rolling, pressing or deep drawing
b) shaping a second sheet metal tubular work piece by rolling, pressing or deep drawing to form a partially finished inner ring (1) with a circumferential radially outwardly bent portion (6) at one axial end
c) introducing rows of balls (3, 4) between the finished outer ring (2) and the partially finished inner ring
d) shaping the partially finished inner ring (1) at the other axial end by rolling or pressing to form a finished inner ring (1) with a circumferential radially outwardly bent portion (6, 7) at both axial ends, whereby the balls (3, 4) serve as counterholds during the rolling or pressing operation, the rings are kept rotating relative to one another to effect rolling the rows of balls (3, 4) constantly about the circumferential periphery of the inner ring and whereby the balls are permanently encapsulated in two rows forming a bearing having a desired tolerance, preferably a bearing free from play.

3. A method of manufacturing a double row angular contact ball bearing having an integral inner ring (1), an integral outer (2) ring and two rows of balls (3, 4) engaging in axially spaced confronting inner and outer raceways of the rings; the inner and outer race rings (1, 2) being made of sheet metal tubular work pieces;
said outer race ring (2) having at least one circumferential depression (5) between the rows of balls (3, 4) and first and second axially extending planar portions (14, 15) extending axially outwardly of respective ones of said rows of balls;
said inner race ring (1) having a circumferential radially outwardly bent portion (6, 7) axially outwardly of each of said rows of balls (3, 4) and a third axially extending planar portion (16) extending between said rows of balls;
and the transition between said first and second planar portions (14, 15) and said depression (5), and between said bent portions (6, 7) and said third planar portion (16), respectively, forming said confronting raceways comprising the steps of:
a) providing a first sheet metal tubular work piece to form a partially finished outer ring (2)
b) shaping a second sheet metal tubular work piece by rolling, pressing or deep drawing to form a finished inner ring (1) with a circumferential radially outwardly bent portion (6) at both axial ends
c) introducing rows of balls (3, 4) between the partially finished outer ring (2) and the finished inner ring
d) shaping the partially finished outer ring (2) by rolling or pressing to form a finished outer ring (2) with a circumferential radially inward depression, whereby the balls (3, 4) serve as counterholds during the rolling or pressing operation, the rings are kept rotating relative to one another to effect rolling the rows of balls (3, 4) constantly about the circumferential periphery of the inner ring and whereby the balls are permanently encapsulated in two rows forming a bearing having a desired tolerance, preferably a bearing free from play.

## Patentansprüche

1. Verfahren zur Herstellung eines doppelreihigen Schrägkugellagers mit einem einstückigen Innenring (1), einem einstückigen Außenring (2) und zwei Reihen Kugeln (3, 4), die in mit axialem zwischenabstand angeordnete, gegenüberliegende, innere und äußere Laufbahnen der Ringe eingreifen, wobei die inneren und äußeren Laufringe (1, 2) aus rohrförmigen Werkstücken aus Metallblech gefertigt sind;
der äußere Laufring (2) wenigstens eine über den Umfang umlaufende Einsenkung (5) zwischen den Kugelreihen (3, 4) sowie erste und zweite axial gerade Bereiche (14, 15) aufweist, die sich jeweils von jeder Kugelreihe axial nach außen erstrecken;
der innere Laufring (1) axial außerhalb jeder der Kugelreihen (3, 4) einen radial nach außen gebogenen Bereich (6, 7) und einen dritten axial geraden Bereich (16) aufweist, der sich zwischen den Kugelreihen erstreckt;
und die Übergänge zwischen jeweils dem ersten bzw. zweiten geraden Bereich (14, 15) und der Einsenkung (5) sowie zwischen den gebogenen Bereichen (6, 7) und dem dritten geraden Bereich (16) die gegenüberliegenden Laufbahnen bilden, mit folgenden Schritten:
a) Formen eines ersten rohrförmigen Werkstücks aus Metallblech mit einer über den Umfang umlaufenden, radialen Einsenkung (5) durch Rollen, Pressen oder Tiefziehen zu einem fertigen Außenring (2)
b) Einführen von Kugelreihen (3, 4) zwischen den fertigen Außenring (2) und ein zweites rohrförmiges Werkstück (1) aus Metallblech, welches einen teilweise fertig bearbeiteten Innenring bildet
c) Formen des teilweise fertig bearbeiteten Innenrings (1) zu einem fertigen Innenring (1) mit jeweils einem umlaufenden, radial nach außen gebogenen Bereich (6, 7) an beiden axialen Enden durch Rollen oder Pressen nach dem Einsetzen der Kugeln unter Drehung des Innenrings (1) in einem Werkzeug, das einen axialen/radialen Druck gegen beide Enden des Innenrings ausübt, wobei die Kugeln (3, 4) während des Roll- oder Preßvorgangs als Gegenhalt dienen, die Ringe relativ zu einander in Drehung gehalten werden, um ein ständiges Umrollen der Reihen von Kugeln (3, 4) um den Umfang des Innenrings zu bewirken, und wobei die Kugeln in zwei Reihen dauerhaft eingeschlossen werden und ein Lager mit einer vorbestimmten Toleranz, vorzugsweise ein spielfreies Lager, gebildet wird.

2. Verfahren zur Herstellung eines doppelreihigen Schrägkugellagers mit einem einstückigen Innenring (1), einem einstückigen Außenring (2) und zwei Reihen Kugeln (3, 4), die in mit axialem Zwischenabstand angeordnete, gegenüberliegende, innere und äußere Laufbahnen der Ringe eingreifen, wobei die inneren und äußeren Laufringe (1, 2) aus rohrförmigen Werkstücken aus Metallblech gefertigt sind;
der äußere Laufring (2) wenigstens eine über den Umfang umlaufende Einsenkung (5) zwischen den Kugelreihen (3, 4) sowie erste und zweite axial gerade Bereiche (14, 15) aufweist, die sich jeweils von jeder Kugelreihe axial nach außen erstrecken;
der innere Laufring (1) axial außerhalb jeder der Kugelreihen (3, 4) einen radial nach außen gebogenen Bereich (6, 7) und einen dritten axial geraden Bereich (16) aufweist, der sich zwischen den Kugelreihen erstreckt;
und die Übergänge zwischen jeweils dem ersten bzw. zweiten geraden Bereich (14, 15) und der Einsenkung (5) sowie zwischen den gebogenen Bereichen (6, 7) und dem dritten geraden Bereich (16) die gegenüberliegenden Laufbahnen bilden, mit folgenden Schritten:
a) Formen eines ersten rohrförmigen Werkstücks aus Metallblech mit einer über den Umfang umlaufenden, radialen Einsenkung (5) durch Rollen, Pressen oder Tiefziehen zu einem fertigen Außenring (2)
b) Formen eines zweiten rohrförmigen Werkstücks aus Metallblech durch Rollen, Pressen oder Tiefziehen zu einem teilweise fertig bearbeiteten Innenring (1) mit einem umlaufenden, radial nach außen gebogenen Bereich (6) an dem einen axialen Ende
c) Einführen von Kugelreihen (3, 4) zwischen den fertigen Außenring (2) und den teilweise fertig bearbeiteten Innenring
d) Formen des teilweise fertig bearbeiteten Innenrings (1) an dem anderen axialen Ende durch Rollen oder Pressen zu einem fertigen Innenring (1) mit jeweils einem umlaufenden, radial nach außen gebogenen Bereich (6, 7) an beiden axialen Enden, wobei die Kugeln (3, 4) während des Roll- oder Preßvorgangs als Gegenhalt dienen, die Ringe relativ zu einander in Drehung gehalten werden, um ein ständiges Umrollen der Reihen von Kugeln (3, 4) um den Umfang des Innenrings zu bewirken, und wobei die Kugeln in zwei Reihen dauerhaft eingeschlossen werden und ein Lager mit einer vorbestimmten Toleranz, vorzugsweise ein spielfreies Lager, gebildet wird.

3. Verfahren zur Herstellung eines doppelreihigen Schrägkugellagers mit einem einstückigen Innenring (1), einem einstückigen Außenring (2) und zwei Reihen Kugeln (3, 4), die in mit axialem Zwischenabstand angeordnete, gegenüberliegende, innere und äußere Laufbahnen der Ringe eingreifen, wobei die inneren und äußeren Laufringe (1, 2) aus rohrförmigen Werkstücken aus Metallblech gefertigt sind;
der äußere Laufring (2) wenigstens eine über den Umfang umlaufende Einsenkung (5) zwischen den Kugelreihen (3, 4) sowie erste und zweite axial gerade Bereiche (14, 15) aufweist, die sich jeweils von jeder Kugelreihe axial nach außen erstrecken;
der innere Laufring (1) axial außerhalb jeder der Kugelreihen (3, 4) einen radial nach außen gebogenen Bereich (6, 7) und einen dritten axial geraden Bereich (16) aufweist, der sich zwischen den Kugelreihen erstreckt;
und die Übergänge zwischen jeweils dem ersten bzw. zweiten geraden Bereich (14, 15) und der Einsenkung (5) sowie zwischen den gebogenen Bereichen (6, 7) und dem dritten geraden Bereich (16) die gegenüberliegenden Laufbahnen bilden, mit folgenden Schritten:
a) Bereitstellung eines ersten rohrförmigen Werkstücks aus Metallblech, um einen teilweise fertig bearbeiteten Außenring (2) zu bilden
b) Formen eines zweiten rohrförmigen Werkstücks aus Metallblech durch Rollen, Pressen oder Tiefziehen zu einem fertig Innenring (1) mit jeweils einem umlaufenden, radial nach außen gebogenen Bereich (6) an beiden axialen Enden
c) Einführen von Kugelreihen (3, 4) zwischen den fertig bearbeiteten Außenring (2) und den fertigen Innenring
d) Formen des teilweise fertig bearbeiteten Außenrings (2) durch Rollen oder Pressen zu einem fertigen Außenring (2) mit einer über den Umfang umlaufenden radialen Einsenkung, wobei die Kugeln (3, 4) während des Roll- oder Preßvorgangs als Gegenhalt dienen, die Ringe relativ zu einander in Drehung gehalten werden, um ein ständiges Umrollen der Reihen von Kugeln (3, 4) um den Umfang des Innenrings zu bewirken, und wobei die Kugeln in zwei Reihen dauerhaft eingeschlossen werden und ein Lager mit einer vorbestimmten Toleranz, vorzugsweise ein spielfreies Lager, gebildet wird.

## Revendications

1. Procédé de fabrication d'un roulement à billes à contact oblique, à deux rangées, comprenant une bague intérieure (1), une bague extérieure (2) en une pièce et deux rangées de billes (3, 4) s'engageant dans les chemins de roulement intérieur et extérieur opposés, espacés axialement, des bagues, les bagues intérieure et extérieure (1, 2) étant réalisées à partir de pièces tubulaires en tôle, ladite bague extérieure (2) ayant au moins une dépression périphérique (5) entre les rangées de billes (3, 4) et des première et seconde portions planes (14, 15) s'étendant axialement à l'extérieur des rangées de billes respectives, ladite bague intérieure (1) ayant une portion périphérique (6, 7) pliée radialement vers l'extérieur et située axialement à l'extérieur de chacune desdites rangées de billes (3, 4) et une troisième portion plane (16) s'étendant axialement entre lesdites rangées de billes, et la transition entre lesdites première et seconde portions planes (14, 15) et ladite dépression (5), et entre lesdites portions pliées (6, 7) et ladite troisième portion plane (16) formant respectivement lesdits chemins de roulement opposés, ledit procédé comprenant les phases suivantes :
a- Formage d'une première pièce tubulaire en tôle avec une dépression périphérique radialement intérieure (5) pour constituer une bague extérieure finie (2) par roulage, emboutissage ou étirage profond,
b- Introduction des rangées de billes (3, 4) entre la bague extérieure finie (2) et une seconde pièce tubulaire en tôle (1) constituant une bague intérieure partiellement finie,
c- Formage de la bague intérieure (1) partiellement finie pour constituer une bague intérieure finie (1), avec une portion périphérique (6, 7) pliée radialement vers l'extérieur aux deux extrémités axiales, par roulage ou emboutissage après insertion des billes en faisant tourner la bague intérieure (1) dans un outil qui exerce une pression axiale / radiale contre les deux extrémités de la bague intérieure, les billes (3, 4) servant de contre-appuis pendant l'opération de roulage ou emboutissage et les bagues étant maintenues en rotation relative pour que les rangées de billes (3,4) tournent constamment à la périphérie de la bague intérieure, et les billes étant enveloppées de façon permanente dans deux rangées en formant un roulement qui a une tolérance désirée, de préférence un roulement sans jeu.

2. Procédé de fabrication d'un roulement à billes à contact oblique, à deux rangées, comprenant une bague intérieure (1), une bague extérieure (2) en une pièce et deux rangées de billes (3, 4) s'engageant dans les chemins de roulement intérieur et extérieur opposés, espacés axialement, des bagues, les bagues intérieure et extérieure (1, 2) étant réalisées à partir de pièces tubulaires en tôle, ladite bague extérieure (2) ayant au moins une dépression périphérique (5) entre les rangées de billes (3, 4) et des première et seconde portions planes (14, 15) s'étendant axialement à l'extérieur des rangées de billes respectives, ladite bague intérieure 1 ayant une portion périphérique (6, 7) pliée radialement vers l'extérieur et située axialement à l'extérieur de chacune desdites rangées de billes (3, 4) et une troisième portion plane (16) s'étendant axialement entre lesdites rangées de billes, et la transition entre lesdites première et seconde portions planes (14, 15) et ladite dépression (5), et entre lesdites portions pliées (6, 7) et ladite troisième portion plane (16) formant respectivement lesdits chemins de roulement opposés, ledit procédé comprenant les phases suivantes :
a- Formage d'une première pièce tubulaire en tôle avec une dépression périphérique (5) radialement intérieure pour constituer une bague extérieure finie (2) par roulage, emboutissage ou étirage profond,
b- Formage d'une seconde pièce tubulaire en tôle par roulage, emboutissage ou étirage profond, pour constituer une bague intérieure partiellement finie (1) avec une portion périphérique (6) pliée radialement vers l'extérieur à une extrémité axiale,
c- Introduction de rangées de billes (3, 4) entre la bague extérieure finie (2) et la bague intérieure partiellement finie (1),
d- Formage de la bague intérieure partiellement finie (1) à l'autre extrémité, par roulage ou emboutissage, pour constituer une bague intérieure finie (1) avec une portion périphérique (6, 7) pliée radialement vers l'extérieur aux deux extrémités axiales, les billes (3, 4) servant de contre-appuis pendant l'opération de roulage ou emboutissage et les bagues étant maintenues en rotation relative pour que les rangées de billes (3, 4) tournent constamment à la périphérie de la bague intérieure et les billes étant en permanence enveloppées dans deux rangées en formant un roulement qui a une tolérance désirée, de préférence un roulement sans jeu.

3. Procédé de fabrication d'un roulement à billes à contact oblique, à deux rangées, comprenant une bague intérieure (1), une bague extérieure (2) en une pièce et deux rangées de billes (3, 4) s'engageant dans les chemins de roulement intérieur et extérieur opposés, espacés axialement, des bagues, les bagues intérieure et extérieure (1, 2) étant réalisées à partir de pièces tubulaires en tôle, ladite bague extérieure (2) ayant au moins une dépression périphérique (5) entre les rangées de billes (3, 4) et des première et seconde portions planes (14, 15) s'étendant axialement à l'extérieur des rangées de billes respectives, "ladite bague intérieure 1 ayant une portion périphérique (6, 7) pliée radialement vers l'extérieur et située axialement à l'extérieur de chacune desdites rangées de billes (3, 4) et une troisième portion plane (16) s'étendant axialement entre lesdites rangées de billes, et la transition entre lesdites première et seconde portions planes (14, 15) et ladite dépression (5), et entre lesdites portions pliées (6, 7) et ladite troisième portion plane (16) formant respectivement lesdits chemins de roulement opposés, ledit procédé comprenant les phases suivantes :
a- Fourniture d'une première pièce tubulaire en tôle pour constituer une bague extérieure partiellement finie (2),
b- Formage d'une seconde pièce tubulaire en tôle par roulage, emboutissage ou étirage profond, pour constituer une bague intérieure-finie (1) avec une portion périphérique (6), pliée radialement vers l'extérieur, aux deux extrémités axiales,
c- Introduction de rangées de billes (3, 4) entre la bague extérieure partiellement finie (2) et la bague intérieure finie (1),
d- Formage de la bague extérieure partiellement finie (2), par roulage ou emboutissage, pour constituer une bague extérieure finie (2) avec une dépression périphérique radialement intérieure, les billes (3, 4) servant de contre-appuis pendant l'opération de roulage ou emboutissage et les bagues étant maintenues en rotation relative pour que les rangées de billes (3, 4) tournent constamment à la périphérie de la bague intérieure, et les billes étant en permanence enveloppées dans deux rangées en formant un roulement qui a une tolérance désirée, de préférence un roulement sans jeu.
